# EUROPEAN PATENT APPLICATION

(11) **EP 1 233 575 A1**
(43) Date of publication of application: **21.08.2002**
(21) Application number: 01440034.5
(22) Date of filing: 19.02.2001
(51) Int. Cl.: H04L 12/28, H04L 29/06

(54) **Method for providing access to a data-network for a vehicle travelling on a road**

(71) Applicant: ALCATEL, 75008 Paris (FR)
(72) Inventor: Kumar, Vinod, 75005 Paris (FR); Coupechoux, Marceau, c/o Alcatel CIT, 91460 Marcoussis (FR)
(74) Representative: Dreiss, Fuhlendorf, Steimle & Becker

(57) **Abstract**

The invention relates to a method for providing access to a data-network (11) for a vehicle (MS) travelling on a road (14). The method uses a plurality of fixed gateways (G1, G2, G3, ...). The vehicle (MS) accesses the data-network (11) via said gateways (G1, G2, G3, ...). In order to enable data-network-access to vehicles (MS) travelling on the road (14) in a simple but nevertheless effective way, in particular enabling a high bandwidth of data transmission between the vehicle (MS) and the data-network (11), it is suggested that the gateways (G1, G2, G3, ...) are disposed along the road (14) and that for accessing the data-network (11) a data-communication-link (16) is established between the vehicle (MS) and at least one of the gateways (G1, G2, G3, ...) via an air interface without using any public mobile network.

## Description

The present invention refers to a method for providing access to a data-network for a vehicle travelling on a road, the method using a plurality of fixed gateways and the vehicle accessing the data-network via said gateways.

Further, the invention relates to a data-network environment comprising a data-network and a plurality of fixed gateways, which are connected to the data-network.

Finally, the present invention relates to a gateway connected to a data-network comprising a plurality of fixed gateways.

A method for providing access to a data-network, preferebly to the Internet, for a vehicle is known from EP 0 890 907 B1 It is disclosed to equip the vehicle with a web server for communication with users in the vehicle and to download at least on pre-selected web page into the web sever when the vehicle is stationary. The web pages stored on the web server may then be accessed by the users during travelling. This method is directed to rather big passenger vehicles such as aircraft or ships. Installing a web server on that kind of vehicle can be accomplished rather easily. However in vehicles travelling on a road such a web server usually cannot be installed. It needs too much space and is too heavy. The restriction of access to the pre-selected web pages stored on the web server is another disadvantage of the method known from the state of the art.

Further, it is well known from the state of the art for vehicles travelling on a road to access a data-network, for example the Internet, by means of a public mobile network such as Global System for Mobile Communications (GSM) or future Universal Mobile Telecommunications System (UMTS) combined with the Wireless Application Protocoll (WAP). However, this solution is rather expensive and not well enough adapted to convey Internet services. Internet-pages, which are usually provided in Hypertext Markup Language (HTML)-standard, additionally have to be provided in Wireless Markup Language (WML)-standard in order to enable access to the Internet-pages by means of WAP. Further, the bandwidth in existing public mobile networks is rather small, so only a restricted amount of data can be transmitted to the vehicle within a given time-period. Therefore, Internet-pages comprising graphics or other storage-consuming contents, cannot be downloaded in an acceptable time period.

It is an object of the present invention to enable data-network-access to vehicles travelling on a road in a simple but nevertheless effective way, in particular enabling a high bandwidth of data transmission between the vehicle and the data-network.

According to the present invention, this object is solved by a method of the above-mentioned kind according to claim 1, characterized in that the gateways are disposed along the road and that for accessing the data-network a data-communication-link is established between the vehicle and at least one of the gateways via an air interface without using any public mobile network.

The data-network may, for example, be the Internet. According to the present invention, it is advantageous but not mandatory if the areas of radiation of the gateways disposed along the road provide a complete coverage of the road. The method will work very well, too, if there are gaps between the areas of radiation of the gateways, i.e. with not overlapping areas of radiation. If the vehicle requests an access to the data-network, it may access the data-network whenever it is within the reach of an area of radiation of at least one of the gateways. It is, for example, possible to install the gateways at petrol stations along the road.

As an example, the air interface may comply with a wireless LAN-standard such as HiperLAN- or IEEE802.11 allowing a bandwidth of up to 11Mbit/s.

According to a prefered embodiment of the present invention for establishing the data-communication-link the location of the vehicle is determined and at least one gateway disposed within a given distance to the location of the vehicle pages its area of radiation waiting for the vehicle to respond and trying to establish the data-communication-link to the vehicle.

Preferebly a plurality of gateways disposed within a given distance to the location of the vehicle page their area of radiation, and the gateway which has established the data-communication-link to the vehicle sends a stop-paging-message after having established the data-communication-link telling the other gateways to stop paging.

It is further suggested that the vehicle's location is determined by determining the gateway which has established the data-communication-link to the vehicle.

According to another prefered embodiment of the present invention, the vehicle sends a request for data-network-access to the gateway disposed closest to the vehicle's location, the request is forwarded to the data-network by the gateway, the request is processed within the data-network generating a response to the request, the response is sent to at least one of the gateways, the data-communication-link is established between one of the gateways and the vehicle, and the response is forwarded to the vehicle by said one gateway across the data-communication-link. The request may, for example, be an http-address (e.g. http://www.company.com) of an Internet-page. In that case the response would be the content of the requested Internet-page.

Preferebly the entire response to the request is stored in storing means of the at least one gateway. The response may be transmitted to the vehicle as soon as the data-communication-link between at least one of the gateways and the vehicle is established via the air interface. The response may be transmitted to the vehicle entirely from one gateway or one or more handovers to further gateways may be carried out during transmission of the response.

According to a prefered embodiment of the present invention the response to the request is sent to a plurality of gateways, the data-communication-link is established between one of said plurality of gateways and the vehicle, and the response is forwarded to the vehicle by said one gateway. This embodiment gives each of the plurality of gateways the possibility to transmit the entire response to the vehicle after establishing the data-communication-link to the vehicle without support from other gateways.

Alternatively it is suggested that the response to the request is sent to one of the gateways, the data-communication-link is established between another of the gateways and the vehicle, the response is transmitted from said one gateway to said other gateway, and the response is forwarded to the vehicle by said other gateway. According to this alternative embodiment the response is not present in the other gateway which established the data-communication-link to the vehicle. Therefore, the response has to be transmitted from the one gateway, where it is stored, to the other gateway before the response can be transmitted to the vehicle across the data-communication-link. The response from the one gateway to the other gateway may be transmitted upon request from the other gateway or automatically after establishing the data-communication-link between the vehicle and the other gateway.

Preferebly the response to the request is sent to the gateway closest to the location of the vehicle when sending the request for data-network-access, the data-communication-link is established between another of the gateways and the vehicle, the response is transmitted from said gateway closest to the location of the vehicle to said other gateway, and the response is forwarded to the vehicle by said other gateway.

Further, it is suggested that the response is transmitted from the one of the gateways to the other gateway across the data-network. The communication between the gateways may be handled across the Internet.

Alternatively, it is suggested that the response is transmitted from the one of the gateways to the other gateway across a wired data-link interconnecting the gateways with eachother. This alternative embodiment requires an additional wired data-link interconnecting the gateways with eachother. This wired data-link may be realized as an electric or as a glass fibre cable, which runs undergrownd or above the ground. The interconnection between the gateways may also be realized as a wireless radio transmission line.

According to the present invention, this object is also solved by a data network environment of the above-mentioned kind according to claim 12, characterized in that the gateways are disposed along a road and comprise means for establishing a data-communication-link with a vehicle travelling on the road via an air interface without using any public mobile network.

According to a prefered embodiment of the present invention, the gateways are interconnected with eachother by means of a wired data-link.

Finally, according to the present invention, this object is also solved by a gateway of the above-mentioned kind according to claim 14, characterized in that the gateway is disposed along a road and comprises means for establishing a data-communication-link with a vehicle travelling on the road via an air interface without using any public mobile network.

According to a prefered embodiment of the present invention, the gateway comprises storing means for storing an entire response generated by the data-network after precessing a request of the vehicle for data-network-access.

Further embodiments of the present invention as well as further advantages of the invention are outlined in the following description of the figures.
- Figure 1: shows a data network environment according to the present invention;
- Figure 2: shows a first prefered embodiment of a method for providing access to a data-network for a vehicle travelling on a road according to the present invention; and
- Figure 3: shows a second prefered embodiment of a method for providing access to a data-network for a vehicle travelling on a road according to the present invention.

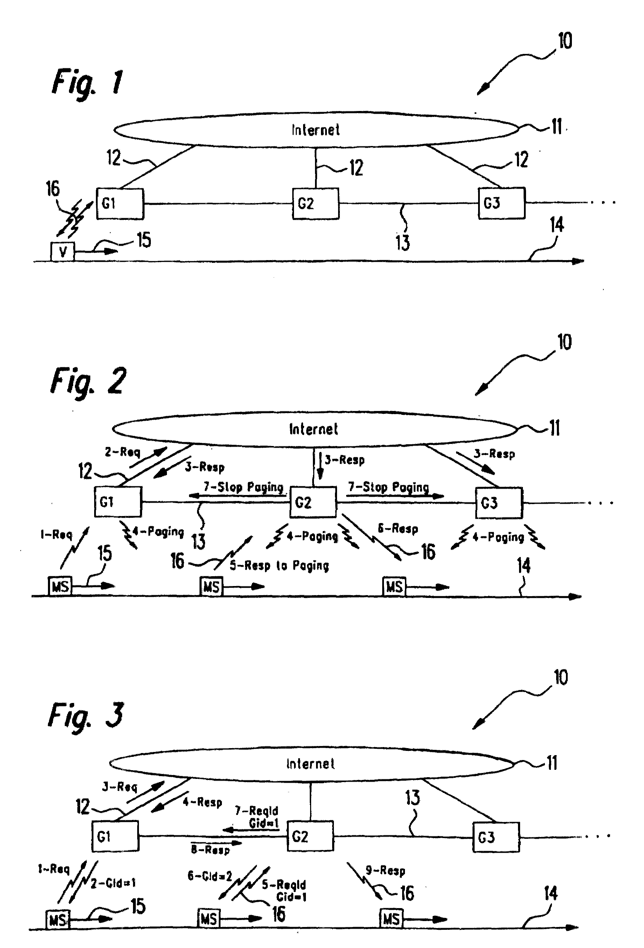

In figure 1 a data-network environment according to the present invention as a whole is referenced by numeral 10. The data-network environment 10 comprises a data-network 11 embodied as the Internet. It further comprises a plurality of gateways G1, G2, G3, ..., each provided with a connection 12 to the data-network 11 and the gateways G1, G2, G3, ... being interconnected with eachother by means of a wired data-link 13 embodied as an electric or a glass fibre cable, which runs undergrownd. The gateways G1, G2, G3, ... are disposed along a road 14 on which a vehicle travels in a direction illustrated by arrow 15. The vehicle is equiped with a mobile station MS. The mobile station MS may be fixed to the vehicle or may be mobile and carried by a person driving in the vehicle. The areas of radiation of the gateways G1, G2, G3, ... may but do not necessarily have to overlap eachother. For example, the gateways G1, G2, G3, ... may be installed at petrol stations or at traffic lights along the road.

In order to provide access to the data-network 11 for the vehicle travelling on the road 14, a data-communication-link 16 is established between one of the gateways G1 and the vehicle via an air interface without using any public mobile network. In more detail, the mobile station MS is able to communicate with the gateways G1, G2, G3, ... in order to establish the data-communication-link 16. That means, the data-communication-link 16 is established without using a Global System for Mobile Communications (GSM)- or future Universal Mobile Telecommunications System (UMTS)-mobile networks. Instead, the air interface may, for example, comply with a wireless LAN-standard such as HiperLAN- or IEEE802.11 allowing a bandwidth of up to 11Mbit/s. According to another example, the air interface may even comply with a Blue-Tooth-standard. In some fields of use the relatively restricted range of a Blue-Tooth-data-communication-link of some 10m may be enough.

The data-network environment 10 shown in figure 1 enables data-network-access to the vehicle travelling on the road 14 in a simple but nevertheless effective way, in particular it enables a high bandwidth of data transmission between the vehicle and the data-network 11. In particular, the data-network environment 10 is used for downloading any kind of information such as tourist information, finance market information, stock exchange information, news or weather from the Internet.

The various steps for accessing the data-network 11 according to a first prefered embodiment of the invention are illustrated in figure 2. In figures 2 and 3 the sequence of the various steps is illustrated by sequence-numbers (1 to 9) before the type of signal (Req, Resp, Paging, etc) being transmitted. In a first step the mobile station MS sends a request 1-Req for data-network-access to the gateway G1 disposed closest to the vehicle. For clarification, sending the request 1-Req has nothing to do with establishing the data-communication-link 16, which will follow later on. The request is, for example, an http-address (e.g. http://www.company.com) of an Internet-page. The gateway G1 forwards the request 2-Req to the data-network 11 across the connection 12. The request Req is processed within the data-network 11 generating a response Resp to the request Req and the entire response 3-Resp is then sent to a plurality of the gateways G1, G2, G3. In the example mentioned above the response Resp would be the content of the requested Internet-page. The entire response Resp is stored in storing means of the gateways G1, G2, G3. Each gateway G1, G2, G3 that received the response Resp pages its area of radiation (4-Paging) waiting for a response of the mobile station MS.

In the meanwhile the vehicle has travelled in the direction 15 along the road 14 and is out of reach of the area of radiation of the gateway G1 but eventually enters the area of radiation of the next gateway G2. The mobile station MS notifies its presence to this gateway G2 (5-Resp to Paging) and the gateway G2 establishes the data-communication-link 16 to the mobile station MS. The gateway G2 forwards the entire response (i.e. the content of the requested Internet-page) 6-Resp to the mobile station MS and sends a stop-paging-message 7-Stop Paging to the other gateways G1, G3, that were paging there area of radiation. As a result all concerned gateways G1, G3 stop paging. The response 6-Resp comprises a number of data-packets which are transmitted to the mobile station MS serially.

The various steps for accessing the data-network 11 according to a second prefered embodiment of the invention are illustrated in figure 3. In a first step the mobile station MS sends a request 1-Req for data-network-access (e.g. http-address of a requested Internet-page) to the gateway G1 disposed closest to the vehicle. The gateway G1 sends its gateway identification number 2-GId=1 to the mobile station MS that associates the GId-number with an identification number of the request ReqId in a table. The gateway G1 forwards the request 3-Req to the data-network 11 across the connection 12. The request Req is processed within the data-network 11 generating a response Resp (e.g. content of requested Internet-page) to the request Req and the entire response 4-Resp is then sent to the gateway G1 which received the request. Alternatively the response may be sent to any one of the other gateways G2, G3, ... If the mobile station is within the area of radiation of the gateway G1, G2, G3, ..., which received the response, that gateway G1, G2, G3, ... can transmit the response to the mobile station MS. Else - like in the present example - the entire response Resp is stored in storing means of that gateway G1.

In the meanwhile the vehicle has travelled in the direction 15 along the road 14 and is out of reach of the area of radiation of the gateway G1 but eventually enters the area of radiation of the next gateway G2. The mobile station MS notifies its presence to this gateway G2 transmitting the identification number of the request and of the gateway G1 it was last connected to (5-ReqId GId=1). The gateway G2 sends its identification number 6-GId=2 to the mobile station and establishes the data-communication-link 16 to the mobile station MS.

As the response to the request with the given identification number ReqId at present is not available at the gateway G2, gateway G2 sends a request for the entire response to gateway G1 across the wired data-link 13. The response can be downloaded from gateway G1 by gateway G2 or it can be uploaded by gateway G1 to gateway G2. The response is transmitted to gateway G2 (8-Resp) across the wired data-link 13 and stored in storing means of gateway G2. In the meanwhile the vehicle has travelled further in the direction 15 along the road 14 but is still within reach of the area of radiation of the gateway 2. The gateway G2 forwards the response (i.e. the content of the requested Internet-page) 9-Resp to the mobile station MS.

However, with the second embodiment of the present invention it is possible to realize a handover if necessary (not shown in the figures). A handover may be necessary if the mobile station MS during transmission of the response 9-Resp from the gateway G2 to the mobile station MS leaves the area of radiation of the gateway G2. Consequently the transmission is interrupted after the transmission of a certain number of data-packets. The vehicle continues to travel on the road 14 in the direction 15 and eventually will enter the area of radiation of gateway G3. A data-communication-link 16 is established between the gateway G3 and the mobile station MS as described above. The mobile station MS can transmit the identification number of the gateway G1, which received the request for data-network-access, or it can transmit the identification number of the gateway G2, the mobile station MS was last connected to.

As the response to the request with the given identification number ReqId at present is not available at the gateway G3, gateway G3 sends a request for the entire response to gateway G1 or the gateway G2 respectively across the wired data-link 13. Either the entire response or those data packets of the response, which have not yet been transmitted to the mobile station MS, are transmitted to the gateway G3 across the wired data-link 13 and stored in storing means of gateway G3. Then gateway G3 forwards the data-packets of the response, which have not yet been transmitted, to the mobile station MS, where the various data-packets are put together again in order to obtain the entire response.

## Claims

1. Method for providing access to a data-network (11) for a vehicle (MS) travelling on a road (14), the method using a plurality of fixed gateways (G1, G2, G3, ...) and the vehicle (MS) accessing the data-network (11) via said gateways (G1, G2, G3, ...), **characterized in that** the gateways (G1, G2, G3, ...) are disposed along the road (14) and that for accessing the data-network (11) a data-communication-link (16) is established between the vehicle (MS) and at least one of the gateways (G1, G2, G3, ...) via an air interface without using any public mobile network.

2. Method according to claim 1, **characterized in that** for establishing the data-communication-link (16) the location of the vehicle (MS) is determined and at least one gateway (G1, G2, G3, ...) disposed within a given distance to the location of the vehicle (MS) pages its area of radiation waiting for the vehicle (MS) to respond and trying to establish the data-communication-link (16) to the vehicle (MS).

3. Method according to claim 2, **characterized in that** a plurality of gateways (G1, G2, G3, ...) disposed within a given distance to the location of the vehicle (MS) page their area of radiation, and the gateway (G2) which has established the data-communication-link (16) to the vehicle (MS) sends a stop-paging-message (7-Stop Paging) after having established the data-communication-link (16) telling the other gateways (G1, G3, ...) to stop paging.

4. Method according to claim 2 or 3, **characterized in that** the vehicle's (MS) location is determined by determining the gateway (G2) which has established the data-communication-link (16) to the vehicle (MS).

5. Method according to one of the preceding claims 1 to 4, **characterized in that** the vehicle (MS) sends a request (1-Req) for data-network-access to the gateway (G1) disposed closest to the vehicle's (MS) location, the request (Req) is forwarded to the data-network (11) by the gateway (G1), the request (Req) is processed within the data-network (11) generating a response (Resp) to the request (Req), the response (Resp) is sent to at least one of the gateways (G1, G2, G3, ...), the data-communication-link (16) is established between one of the gateways (G2) and the vehicle (MS), and the response (Resp) is forwarded to the vehicle (MS) by said one gateway (G2) across the data-communication-link (16).

6. Method according to claim 5, **characterized in that** the entire response (Resp) to the request (Req) is stored in storing means of the at least one gateway (G1, G2, G3, ...).

7. Method according to claim 5 or 6, **characterized in that** the response (Resp) to the request (Req) is sent to a plurality of gateways (G1, G2, G3), the data-communication-link (16) is established between one (G2) of said plurality of gateways and the vehicle (MS), and the response (Resp) is forwarded to the vehicle (MS) by said one gateway (G2).

8. Method according to claim 5 or 6, **characterized in that** the response (Resp) to the request (Req) is sent to one (G1) of the gateways, the data-communication-link (16) is established between another (G2) of the gateways and the vehicle (MS), the response (8-Resp) is transmitted from said one gateway (G1) to said other gateway (G2), and the response (9-Resp) is forwarded to the vehicle (MS) by said other gateway (G2).

9. Method according to claim 8, **characterized in that** the response (Resp) to the request (Req) is sent to the gateway (G1) closest to the location of the vehicle (MS) when sending the request (1-Req) for data-network-access, the data-communication-link (16) is established between another (G2) of the gateways and the vehicle (MS), the response (8-Resp) is transmitted from said gateway (G1) closest to the location of the vehicle (MS) to said other gateway (G2), and the response (9-Resp) is forwarded to the vehicle (MS) by said other gateway (G2).

10. Method according to claim 8 or 9, **characterized in that** the response (8-Resp) is transmitted from the one (G1) of the gateways to the other gateway (G2) across the data-network (11).

11. Method according to claim 8 or 9, **characterized in that** the response (8-Resp) is transmitted from the one (G1) of the gateways to the other gateway (G2) across a wired data-link (13) interconnecting the gateways (G1, G2, G3, ...) with eachother.

12. Data-network environment (10) comprising a data-network (11) and a plurality of fixed gateways (G1, G2, G3, ...), which are connected to the data-network (11), **characterized in that** the gateways (G1, G2, G3, ...) are disposed along a road (14) and comprise means for establishing a data-communication-link (16) with a vehicle (MS) travelling on the road (14) via an air interface without using any public mobile network.

13. Data-network environment (10) according to claim 12, **characterized in that** the gateways (G1, G2, G3, ...) are interconnected with eachother by means of a wired data-link (13).

14. Gateway (G1, G2, G3, ...) connected to a data-network (11) comprising a plurality of fixed gateways (G1, G2, G3, ...), **characterized in that** the gateway (G1, G2, G3, ...) is disposed along a road (14) and comprises means for establishing a data-communication-link (16) with a vehicle (MS) travelling on the road (14) via an air interface without using any public mobile network.

15. Gateway (G1, G2, G3, ...) according to claim 14, **characterized in that** the gateway (G1, G2, G3, ...) comprises storing means for storing an entire response (Resp) generated by the data-network (11) after precessing a request (Req) of the vehicle (MS) for data-network-access.

## Amended claims

### Amended claims in accordance with Rule 86(2) EPC.

**1.** Method for providing access to a data-network (11) for a vehicle (MS) travelling on a road (14), the method using a plurality of fixed gateways (G1, G2, G3, ...) and the vehicle (MS) accessing the data-network (11) via said gateways (G1, G2, G3, ...), wherein the gateways (G1, G2, G3, ...) are disposed along the road (14) and for accessing the data-network (11) a data-communication-link (16) is established between the vehicle (MS) and at least one of the gateways (G1, G2, G3, ...) via an air interface without using any public mobile network, **characterized in that** the vehicle (MS) sends a request (1-Req) for data-network-access to the gateway (G1) disposed closest to the vehicle's (MS) location, the request (Req) is forwarded to the data-network (11) by the gateway (G1), the request (Req) is processed within the data-network (11) generating a response (Resp) to the request (Req), the response (Resp) is sent to at least one of the gateways (G1, G2, G3, ...), the data-communication-link (16) is established between one of the gateways (G2) and the vehicle (MS), and the response (Resp) is forwarded to the vehicle (MS) by said one gateway (G2) across the data-communication-link (16).

**2.** Method according to claim 1, **characterized in that** for establishing the data-communication-link (16) the location of the vehicle (MS) is determined and at least one gateway (G1, G2, G3, ...) disposed within a given distance to the location of the vehicle (MS) pages its area of radiation waiting for the vehicle (MS) to respond and trying to establish the data-communication-link (16) to the vehicle (MS).

**3.** Method according to claim 2, **characterized in that** a plurality of gateways (G1, G2, G3, ...) disposed within a given distance to the location of the vehicle (MS) page their area of radiation, and the gateway (G2) which has established the data-communication-link (16) to the vehicle (MS) sends a stop-paging-message (7-Stop Paging) after having established the data-communication-link (16) telling the other gateways (G1, G3, ...) to stop paging.

**4.** Method according to claim 2 or 3, **characterized in that** the vehicle's (MS) location is determined by determining the gateway (G2) which has established the data-communication-link (16) to the vehicle (MS).

**5.** Method according to one of the preceding claims 1 to 4, **characterized in that** the entire response (Resp) to the request (Req) is stored in storing means of the at least one gateway (G1, G2, G3, ...).

**6.** Method according to one of the claims 1 to 5, **characterized in that** the response (Resp) to the request (Req) is sent to a plurality of gateways (G1, G2, G3), the data-communication-link (16) is established between one (G2) of said plurality of gateways and the vehicle (MS), and the response (Resp) is forwarded to the vehicle (MS) by said one gateway (G2).

**7.** Method according to one of the claims 1 to 5, **characterized in that** the response (Resp) to the request (Req) is sent to one (G1) of the gateways, the data-communication-link (16) is established between another (G2) of the gateways and the vehicle (MS), the response (8-Resp) is transmitted from said one gateway (G1) to said other gateway (G2), and the response (9-Resp) is forwarded to the vehicle (MS) by said other gateway (G2).

**8.** Method according to claim 7, **characterized in that** the response (Resp) to the request (Req) is sent to the gateway (G1) closest to the location of the vehicle (MS) when sending the request (1-Req) for data-network-access, the data-communication-link (16) is established between another (G2) of the gateways and the vehicle (MS), the response (8-Resp) is transmitted from said gateway (G1) closest to the location of the vehicle (MS) to said other gateway (G2), and the response (9-Resp) is forwarded to the vehicle (MS) by said other gateway (G2).

**9.** Method according to claim 7 or 8, **characterized in that** the response (8-Resp) is transmitted from the one (G1) of the gateways to the other gateway (G2) across the data-network (11).

**10.** Method according to claim 7 or 8, **characterized in that** the response (8-Resp) is transmitted from the one (G1) of the gateways to the other gateway (G2) across a wired data-link (13) interconnecting the gateways (G1, G2, G3, ...) with eachother.

**11.** Data-network environment (10) comprising a data-network (11) and a plurality of fixed gateways (G1, G2, G3, ...), which are connected to the data-network (11), wherein the gateways (G1, G2, G3, ...) are disposed along a road (14) and comprise means for establishing a data-communication-link (16) with a vehicle (MS) travelling on the road (14) via an air interface without using any public mobile network, **characterized in that** the gateways (G1, G2, G3, ...) comprise means for receiving a request (1-Req) for data-network-access from the vehicle (MS) and means for forwarding the request (Req) to the data-network (11), that the data-network (11) comprises means for processing the request (req), means for generating a response (Resp) to the request and means for sending the response (Resp) to at least one of the gateways (G1, G2, G3, ...), that the gateways (G1, G2, G3, ...) further comprise means for receiving the response (Resp), means for establishing the data-communication-link (16) between at least on of the gateways (G1, G2, G3, ...) and the vehicle (MS) and means for forwarding the response (Resp) to the vehicle (MS) across the data-communication-link (16).

**12.** Data-network environment (10) according to claim 11, **characterized in that** the gateways (G1, G2, G3, ...) are interconnected with eachother by means of a wired data-link (13).

**13.** Gateway (G1, G2, G3, ...) connected to a data-network (11) comprising a plurality of fixed gateways (G1, G2, G3, ...), wherin the gateway (G1, G2, G3, ...) is disposed along a road (14) and comprises means for establishing a data-communication-link (16) with a vehicle (MS) travelling on the road (14) via an air interface without using any public mobile network, **characterized in that** the gateway (G1, G2, G3, ...) further comprises means for receiving a request (1-Req) for data-network-access from the vehicle (MS), means for forwarding the request (Req) to the data-network (11), means for receiving a response (Resp) to the request (Req) generated by the data-network (11), means for establishing the data-communication-link (16) between at least on of the gateways (G1, G2, G3, ...) and the vehicle (MS) and means for forwarding the response (Resp) to the vehicle (MS) across the data-communication-link (16).

**14.** Gateway (G1, G2, G3, ...) according to claim 13, **characterized in that** the gateway (G1, G2, G3, ...) comprises storing means for storing an entire response (Resp) generated by the data-network (11) after precessing a request (Req) of the vehicle (MS) for data-network-access.
